# EUROPEAN PATENT APPLICATION

(11) **EP 4 350 453 A1**
(43) Date of publication of application: **10.04.2024**
(21) Application number: 22815408.4
(22) Date of filing: 18.04.2022
(51) Int. Cl.: G05D 1/00, G06K 9/00, G06T 7/00, G06N 3/02, H04N 5/225, H04N 7/18

(54) **METHOD AND EQUIPMENT FOR DETECTING THE LOCATION AND SPEED OF A RAILWAY VEHICLE**

(30) Priority: 03.06.2021 ES 202130511
(71) Applicant: Ostirión, S.L.U., 28001 Madrid (ES)
(72) Inventor: BARRIO CRESPO, Héctor, 28001 MADRID (ES)
(74) Representative: Díaz de Bustamante y Terminel, Isidro
(86) International application number: PCT/ES2022/070236
(87) International publication number: WO 2022/254057

(57) **Abstract**

The invention relates to a METHOD AND EQUIPMENT FOR DETECTING THE LOCATION AND SPEED OF A RAILWAY VEHICLE which comprises: high-resolution video cameras (1) with a high capture rate incorporated in the train (2), to capture an image of the track (6) and passive elements (5) of the track; optical processors (3a, 3b, 3c), connected to the camera or cameras (1), based on artificial intelligence technologies and deep neural networks, to determine the speed and location of the train (2), preferably a signal detector (3a), a character reader (3b) and an optical flow meter (3c); a screen (4) that displays a representation of the processed information; a communication module for sending data to the screen (4) and/or to other remote devices of rail traffic control centres.

## Description

### OBJECT OF THE INVENTION

The invention, as exposed on the wording of the present specification, refers to a method and equipment for detecting the location and speed of a railway vehicle which imparts to the function it is intended to, advantages and characteristics, which are described in detail below, which are an improvement of the current state of the art.

More specifically, the object of the invention focuses on a method, and on equipment to carry out said method, whose purpose, designed as an additional system to the systems currently existing in railway vehicles, is to allow knowing the location of the train at any time that is needed and in an inexpensive way, for which it is based on optical recognition through the use of artificial intelligence technology which, among other advantages, constitutes a system that is totally independent of the train equipment for its operation and it is only partially dependent on some of the passive track signals, such as kilometre markers or station signs.

### APPLICATION FIELD OF THE INVENTION

The field of application of the present invention is framed within the railway industry sector, focusing particularly on the field of location and speed control systems.

### BACKGROUND OF THE INVENTION

Modern rail traffic control systems (for example ERTMS Level 3, European Rail Traffic Management System ERTMS) require accurate and constant information on the location of each train on the tracks. This location is necessary to maintain the system of moving blocks that improves the circulation capacity on the track.

Currently, this locating of the train is achieved through electronic beacons placed on the track. These beacons, however, are relatively expensive installations and require high reliability to fulfil their function.

Additionally, the train may be equipped with satellite or odometry positioning systems, which in turn are subject to their own errors and failure modes.

Therefore, railway traffic would greatly benefit from being able to have an additional and independent system that improves the reliability of the locating of the train on the track, the objective of the present invention being the development of a system for this purpose based on the use of artificial intelligence models that, currently, have only been applied in products developed for other sectors.

On the other hand, and as a reference to the current state of the art, it should be noted that, at least on the part of the applicant, the existence of any method and/or equipment for detecting the location and speed of a railway vehicle that presents technical and constitutive characteristics equal or similar to those presented by the one claimed herein.

In this sense, it should be noted that numerous documents are known that describe methods and systems close to the object of the present invention applicable in the railway field, of which the following can be mentioned as closest examples:
Patent E16713405 referring to a method and arrangement for locating a railway vehicle in circulation in a train control and train protection system CBTC (communications-based train control).
Patent E17728152 referring to a method for operating a location device, as well as a location device.
Patent E14380039 referring to a communication method and system for the exchange of information between guided vehicles.
Patent E17702842 referring to an arrangement for monitoring the occupancy status of a railway switch or a track area.
Patent E16756823 referring to a system, computer program product and method for determining the location of a vehicle in relation to a stopping point.
Patent E16187965 referring to a train location system along the tracks of a railway network.
Patent E16704000 referring to a device and method for detecting cold movement of a railway vehicle, as well as a railway vehicle with said device.
Patent E16703946 referring to a location method and device for determining the location of a guided vehicle, in particular a railway vehicle.
Or patent E13762778 referring to a method for locating a railway vehicle.

However, it does not appear that any of the aforementioned inventions, taken separately or in combination, describe the method and/or equipment object of the present invention.

### EXPLANATION OF THE INVENTION

The method and equipment for detecting the location and speed of a railway vehicle proposed by the invention represent an optimal solution to the objective described above, with the characterizing details that make it possible and that distinguish them conveniently included in the final claims that accompany the present description.

What the invention proposes, as noted above, is a method and equipment to carry out said method which, designed as an additional system to the systems currently existing in railway vehicles, has the objective of allowing the location of the train to be known at any time that is needed, which, based on optical recognition through the use of artificial intelligence technology, among other advantages, means that it is a system that operates completely independently of the train equipment and only partially dependent on some of the passive signals existing on the track, such as kilometre point markers or station signs.

Thus, in the method and equipment object of the invention, optical recognition means are used to replace other forms of information previously used in electromagnetic support, allowing them to be adaptable to existing camera systems, and to be able to create an additional and independent system that provides redundancies to the conventional system that these railway vehicles already have, making it more reliable and robust.

For all this, and more specifically, the equipment to carry out the method object of the invention consists of a system that comprises one or more high resolution and high capture rate video cameras, installed in the train and connected to several optical processors; specifically, at least three: a signal detector, which in addition to signals also detects other passively existing objects on the track and discriminates whether or not they are signals, a character reader, which interprets the characters when it detects them in a signal to determine the location of the train, and an optical flow meter that detects and interprets the pattern of movement of objects on the track relative to the train to determine the speed of the train.

These three processors, in order to carry out said detection, are based on artificial intelligence technologies and deep neural networks.

The orchestration between the three processors is capable of providing the speed and location of the train regardless of the state of the train systems and track infrastructure.

In addition, the location information is sent and represented on a screen that, preferably, is arranged superimposed on the track map in at least one traffic control centre and is also sent to the train communication systems in order to be transmitted also to other traffic control centres if necessary.

The equipment for detecting the location and speed of the train is, furthermore, advantageously inexpensive, and easily integrated into existing systems, both as a complete solution, that is, including cameras, computers, and software, or as a partial solution, including only computers and software, in case the train already has a camera or cameras suitable for the equipment.

On the other hand, compared to existing locating systems, it provides the following advantages:
- System independence: The optical system can determine the location and speed of the train without relying on satellite positioning systems, wheel odometry or on-track radio beacons.
- Cost effective: The system is computing intensive and dependent on affordable subsystems. It does not require multiple equipment on the track each interval.
- Easy to integrate: The system is easily integrated into all types of trains running on any type of track, regardless of the ERTMS level for which both the trains and the track are qualified.

### DESCRIPTION OF THE DRAWINGS

In order to complement the description being made and to ease a better understanding of the characteristics of the invention, is attached to the present specification, making part of the same, a set of layouts where, with an illustrative non limitative character, the following has been represented:
Figure number 1.- Shows, in a block diagram, a representation of the set of elements that comprises the equipment to carry out the method for detecting the location and speed of a railway vehicle, according to the invention.
And figure number 2.- Shows a schematic representation of a railway vehicle in whose head the cameras that the equipment comprises have been installed, showing, through dashed lines, the capture they make of some passive elements of the track.

### PREFERRED EMBODIMENT OF THE INVENTION

In view of the aforementioned figures, and in accordance with the numbering adopted, one can see in them an example of a non-limiting embodiment of the equipment to carry out the method for detecting the location and speed of a railway vehicle, according to the invention, which comprises what is indicated and described in detail below.

Thus, on the one hand, the method for detecting the location and speed of a railway vehicle or train (2) object of the invention comprises, at least, the following steps:
- capturing of one imagen of the track (6) and the passive elements (5) existing thereon, by means of one or more video cameras (1) installed in the front of the train (2).
- Processing of the information of the optical signal (1a) captured by the camera or cameras (1) using optical processors (3a, 3b, 3c), based on artificial intelligence technologies and deep neural networks, capable of determining, regardless of the state of the train systems and track infrastructure, the speed and location of the train (2). Preferably, the optical signal is processed by a signal detector (3a) that detects signals or objects or passive elements (5) of the track (6), a character reader (3b) that interprets the characters and signs of the signals (5) of the track (6) and an optical flow meter (3c).
- Sending the processed location and speed information (i) to at least one control centre (7).
- Representation on a screen (4) of the processed location and speed information (i) of the train (2).

Preferably, the method also comprises another step of sending the location and speed information (i) processed by the optical processors (3a, 3b, 3c) to the communication systems of the train (2) in order to be transmitted to other traffic control centres if necessary.

And, for its part, the equipment to carry out the aforementioned method, as seen in the figures, essentially comprises:
- One or more high-resolution, high-capture rate video cameras (1) incorporated into the train (2), preferably in the front part of the train (2) head, so that they capture the image of the track (6) and the passive elements (5) thereof.
- Hardware installed in the train (2) and provided with optical processor chips (3a, 3b, 3c), based on artificial intelligence technologies and deep neural networks capable of determining the speed and location of the train (2), connected to the camera or cameras (1) of the train (2) so that they collect the optical signal (1a) captured by them, preferably comprising at least:
   - a signal detector (3a),
   - a character reader (3b) and
   - an optical flow meter (3c),
- At least one screen (4), that displays a representation of the processed location and speed information (i).
- And, at least, one communication module (not shown), for sending data and information (i) from the hardware with the optical processors (3a, 3b, 3c) to the screen (4) and/or to other remote devices of railway traffic control centres, module which may or may not belong to the train (2) communication system itself.

Having sufficiently described the nature of the present invention, as well as a way of putting it into practice, it is not considered necessary to make a more extensive explanation in order that any person skilled in the art will understand its scope and the advantages derived from it, making known that, within reason it could be put into practice in other embodiments differing in detail from that indicated by way of example, and which will obtain the degree of protection that is sought, provided that its fundamental principle is not altered, changed or modified.

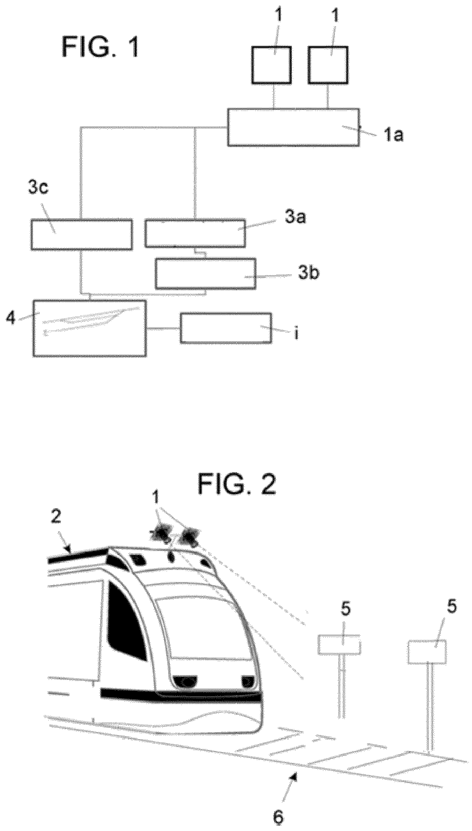

## Claims

1. METHOD FOR DETECTING THE LOCATION AND SPEED OF A RAILWAY VEHICLE which, applicable as an additional system to the systems currently existing in railway vehicles, is **characterized by** comprising, at least, the following steps:
- capturing of one imagen of the track (6) and the passive elements (5) existing thereon, by means of one or more video cameras (1) installed in the front of the train (2);
- processing of the information of the optical signal (1a) captured by the camera or cameras (1) by means of optical processors (3a, 3b, 3c), based on artificial intelligence technologies and deep neural networks, capable of determining the speed and location of the train (2);
- sending the processed location and speed information (i) to at least one control centre (7);
- representation on a screen (4) of the processed location and speed information (i) of the train (2).

2. METHOD FOR DETECTING THE LOCATION AND SPEED OF A RAILWAY VEHICLE according to claim 1 **characterized in that** the optical signal (1a) from the camera or cameras (1) is processed by a signal detector (3a) which detects passive signals or objects (5) of the track (6), a character reader (3b) which interprets the characters and signs of the signals (5) of the track (6) and an optical flow meter (3c).

3. METHOD FOR DETECTING THE LOCATION AND SPEED OF A RAILWAY VEHICLE according to claim 1 or 2, **characterized in that** it comprises a step of sending the location and speed information (i) processed by the optical processors (3a, 3b, 3c) to communication systems of the train (2) to be transmitted to other traffic control centres.

4. EQUIPMENT FOR DETECTING THE LOCATION AND SPEED OF A RAILWAY VEHICLE, applicable as an additional system to the systems currently existing in railway vehicles, **characterized by** comprising:
- one or more high resolution and high capture rate video cameras (1) incorporated into the train (2);
- hardware provided with optical processor chips (3a, 3b, 3c), based on artificial intelligence technologies and deep neural networks capable of determining the speed and location of the train (2), connected to the camera or cameras (1) of the train (2);
- at least one screen (4), that displays a representation of the processed location and speed information (i);
- a communication module, for sending data and information (i) from the hardware with the optical processors (3a, 3b, 3c) to the screen (4) and/or to other remote devices.

5. EQUIPMENT FOR DETECTING THE LOCATION AND SPEED OF A RAILWAY VEHICLE, according to claim 4, **characterized in that**, as optical processors, it comprises at least:
- a signal detector (3a),
- a character reader (3b) and
- an optical flow meter (3c),

6. EQUIPMENT FOR DETECTING THE LOCATION AND SPEED OF A RAILWAY VEHICLE, according to claim 4 or 5, **characterized in that** the communication module, for sending data and information (i) from the hardware with the optical processors (3a, 3b, 3c) to the screen (4) and/or other remote devices, belongs to the train (2) communication system itself.
